# EUROPEAN PATENT APPLICATION

(11) **EP 3 032 387 A1**
(43) Date of publication of application: **15.06.2016**
(21) Application number: 15152594.6
(22) Date of filing: 27.01.2015
(51) Int. Cl.: G06F 3/044

(54) **Touch panel and sensing electrode thereof**

(30) Priority: 04.12.2014 TW 103142133
(71) Applicant: JTOUCH Corporation, Taoyuan County 32063 (TW)
(72) Inventor: Yeh, Yu-Chou, 32063 Jhongli City, Taoyuan County (TW); Lin, Ting-Ching, 32063 Jhongli City, Taoyuan County (TW); Chen, Yi-Chin, 32063 Jhongli City, Taoyuan County (TW); Kang, Jia-Hao, 32063 Jhongli City, Taoyuan County (TW)
(74) Representative: 2K Patentanwälte Blasberg Kewitz & Reichel

(57) **Abstract**

A touch panel (1) includes a transparent substrate (10), a sensing electrode (11, 21) and plural metallic traces (12). The transparent substrate (10) includes a visible touch zone (A) and a periphery wiring zone (B). A first side and a second side of the visible touch zone (A) are in parallel with a first axis (X) and a second axis (Y), respectively. The sensing electrode (11, 21) is disposed on the transparent substrate (10) and included in the visible touch zone (A). The sensing electrode (11, 21) includes plural first metal lines (111, 211) and plural second metal lines (112, 212). The plural first metal lines (111, 211) are separated from each other. The plural second metal lines (112, 212) are separated from each other. The plural first metal lines (111, 211) and the plural second metal lines (112, 212) are non-linear and tilted relative to the first axis (X) and the second axis (Y). The plural metallic traces (12) are included in the periphery wiring zone (B) and electrically connected with the sensing electrode (11, 21).

## Description

### FIELD OF THE INVENTION

The present invention relates to a touch panel and a sensing electrode thereof, and more particularly to a touch panel for reducing moire generation and a sensing electrode thereof.

### BACKGROUND OF THE INVENTION

Nowadays, touch control technologies are widely applied to the touch display devices of various electronic products in order to facilitate the users to control the operations of the electronic products. Moreover, for achieving the displaying function and making the electrodes of the touch zone unrecognizable, transparent touch electrodes are usually used as the electrodes of the touch zone of the display panel. For example, the transparent touch electrodes are made of indium tin oxide (ITO). As the trend of designed touch panel is developed toward the large-sized touch panel, the uses of the ITO transparent electrodes have some drawbacks. For example, the resistance value is increased and the touch response speed is reduced. Moreover, since the method of fabricating the large-sized touch panel with the ITO transparent electrodes needs many steps, the fabricating cost is increased. Consequently, a metal mesh sensing electrode is gradually employed to replace the ITO transparent electrode.

However, when the metal mesh of the touch panel is attached on a display panel, a moire is readily generated. The displaying quality is adversely affected by the moire. As known, the shape of the metal mesh pattern may influence the generation of moire. Generally, if the adjacent fringes are regularly arranged, the possibility of generating the moire increases. Moreover, if the width of the metal mesh increases or the adjacent fringes overlap or crisscross each other, the possibility of generating the moire also increases. Moreover, if the metal mesh of the touch panel and the thin film transistor array (e.g. the black matrix or the RGB pixel array) of the display panel are regular mesh structures, the possibility of generating the moire would also increase when the touch panel is attached on the display panel and these two regular network structures are overlapped with each other.

For avoiding or minimizing the moire phenomenon, some approaches have been disclosed. For example, the profiles of the metal mesh of the touch panel may be designed according to the thin film transistor array of the display panel. In particular, for increasing the visibility, plural linear metal lines are regularly arranged in a crisscrossed form so as to define the metal mesh. For example, the metal mesh comprises plural linear first metal lines and plural linear second metal lines. The plural linear first metal lines are oriented along a first direction and in parallel with each other. The plural linear second metal lines are oriented along a second direction and in parallel with each other. Moreover, the plural linear first metal lines and the plural linear second metal lines are crisscrossed with each other. Consequently, a touch-sensitive array pattern is defined by the plural linear first metal lines and the plural linear second metal lines collaboratively. As mentioned above, the metal mesh pattern of the touch panel should be arranged to match the thin film transistor array of the display panel for reducing the morie phenomenon. Under this circumstance, the spacing intervals between the plural metal lines and the crisscrossing angles of the metal lines should be elaborately designed. In other words, the designing complexity increases. Moreover, the visibility is readily reduced because of the designing error of the metal mesh.

Therefore, there is a need of providing an improved touch panel and a sensing electrode thereof in order to overcome the above drawbacks.

### SUMMARY OF THE INVENTION

The present invention provides a touch panel and a sensing electrode thereof. By specially designing the pattern of the metal mesh of the sensing electrode, the possibility of generating the moire is largely reduced and the visibility is enhanced.

The present invention further provides a touch panel and a sensing electrode thereof. The arrangement of the metal mesh of the touch panel is no longer determined according to the thin film transistor array of the display panel. After the touch panel is attached on the display panel, the possibility of generating the moire will be minimized.

In accordance with an aspect of the present invention, there is provided a touch panel. The touch panel includes a transparent substrate, a sensing electrode and plural metallic traces. The transparent substrate includes a visible touch zone and a periphery wiring zone. A first side and a second side of the visible touch zone are in parallel with a first axis and a second axis, respectively. The sensing electrode is disposed on the transparent substrate and included in the visible touch zone. The sensing electrode includes plural first metal lines and plural second metal lines. The plural first metal lines are separated from each other. The plural second metal lines are separated from each other. The plural first metal lines and the plural second metal lines are non-linear and tilted relative to the first axis and the second axis. The plural first metal lines and the plural second metal lines of the sensing electrode are crisscrossed with each other to construct plural irregular mesh units. Moreover, the plural irregular mesh units have different profiles with each other. The plural metallic traces are disposed on the transparent substrate and included in the periphery wiring zone. Moreover, the plural metallic traces are electrically connected with the sensing electrode.

In accordance with another aspect of the present invention, there is provided a sensing electrode. The sensing electrode is included in a visible touch zone of a touch panel. A first side of the visible touch zone is in parallel with a first axis. A second side of the visible touch zone is in parallel with a second axis. The sensing electrode includes plural first metal lines and plural second metal lines. The plural first metal lines are separated from each other and tilted relative to the first axis and the second axis. The plural second metal lines are separated from each other. The plural first metal lines and the plural second metal lines are non-linear and tilted relative to the first axis and the second axis. The plural first metal lines and the plural second metal lines of the sensing electrode are crisscrossed with each other to construct plural irregular mesh units. Moreover, the plural irregular mesh units have different profiles with each other. The plural metallic traces are disposed on the transparent substrate and included in the periphery wiring zone. Moreover, the plural metallic traces are electrically connected with the sensing electrode.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the structure of a touch panel according to an embodiment of the present invention;
FIG. 2A schematically illustrates the structure of an exemplary sensing electrode of the touch panel of FIG. 1;
FIG. 2B is a schematic enlarged fragmentary view illustrating a first region P of the sensing electrode of FIG. 2A;
FIG. 2C is a schematic enlarged fragmentary view illustrating a second region Q of the sensing electrode of FIG. 2A;
FIG. 3A schematically illustrates the structure of another exemplary sensing electrode of the touch panel of FIG. 1; and
FIG. 3B is a schematic enlarged fragmentary view illustrating a portion of the sensing electrode of FIG. 3A.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

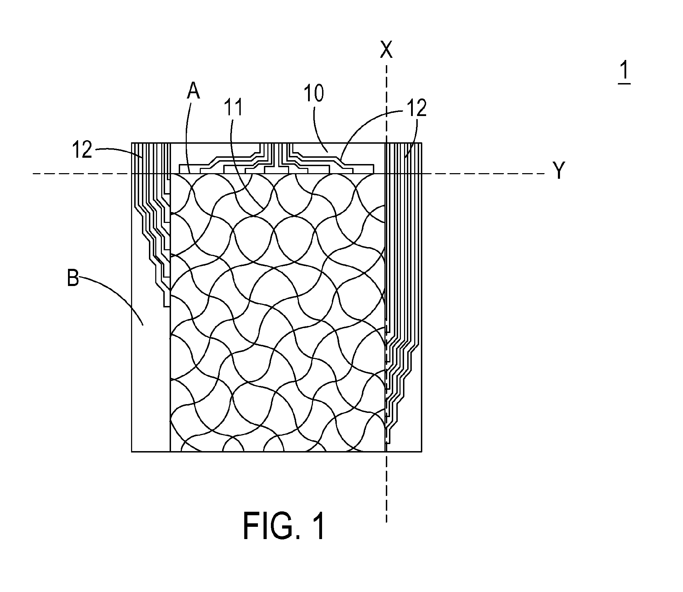

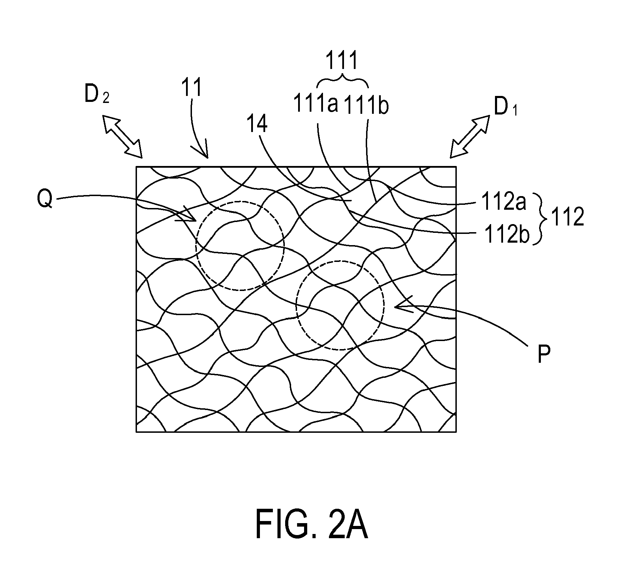

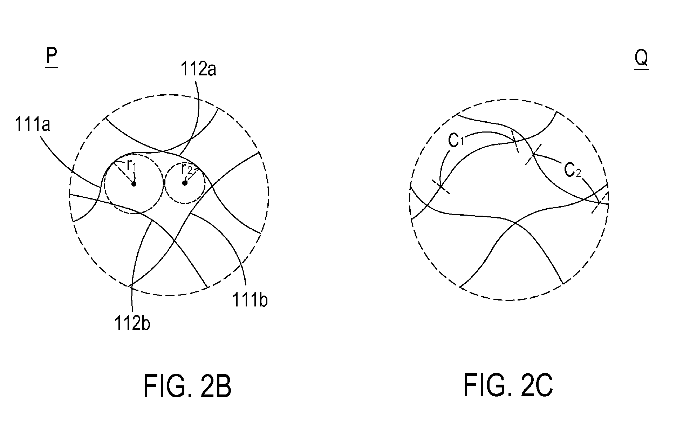

FIG. 1 schematically illustrates the structure of a touch panel according to an embodiment of the present invention. FIG. 2A schematically illustrates the structure of an exemplary sensing electrode of the touch panel of FIG. 1. As shown in FIGS. 1 and 2, the touch panel 1 comprises a transparent substrate 10, a sensing electrode 11 and plural metallic traces 12. The transparent substrate 10 is divided into a visible touch zone A and a periphery wiring zone B. Moreover, a first side and a second side of the visible touch zone A are in parallel with a first axis X and a second axis Y, respectively, which is preferably perpendicular to the first axis X. The sensing electrode 11 is disposed on the transparent substrate 10 and included in the visible touch zone A. The plural metallic traces 12 are disposed on the transparent substrate 10 and included in the periphery wiring zone B. Moreover, the plural metallic traces 12 are electrically connected with the sensing electrode 11.

In this embodiment, the sensing electrode 11 of the touch panel 1 is a metal mesh. The sensing electrode 11 comprises plural first metal lines 111 and plural second metal lines 112. The plural first metal lines 111 are separated from each other and substantially oriented along a first direction D₁. Every two adjacent first metal lines 111a and 111b are not crisscrossed with each other. Moreover, the plural first metal lines 111 are non-linear metal lines (i.e. metal lines running not exactly along a straight line but instead along a line, which is curved once or multiple times, , i.e. has one or several local extrema) and tilted relative to the first axis X and the second axis Y. Preferably, the plural first metal lines 111 are curvy metal lines. The plural second metal lines 112 are separated from each other and substantially oriented along a second direction D₂. Every two adjacent second metal lines 112a and 112b are not crisscrossed with each other. Moreover, the plural second metal lines 112 are non-linear metal lines (i.e. metal lines running not exactly along a straight line but instead along a line, which is curved once or multiple times, i.e. has one or several local extrema) and tilted relative to the first axis X and the second axis Y. Preferably, the plural second metal lines 112 are curvy metal lines. Consequently, an irregular mesh unit 14 is defined by every two adjacent first metal lines 111a and 111b and every two adjacent second metal lines 112a and 112b. In other words, the plural first metal lines 111 and the plural second metal lines 112 of the sensing electrode 11 are crisscrossed with each other to construct plural irregular mesh units 14. In this embodiment, the profiles of these irregular mesh units 14 are different. In this embodiment, the first direction D₁ and the second direction D₂ are tilted relative to the first axis X and the second axis Y. Preferably, the tilt angle is in the range between 30 and 60 degree. Under this circumstance, the transmittance is better. Moreover, the angle between the first direction D₁ and the second direction D₂ is in the range between 60 and 120 degree, but is not limited thereto.

Please refer to FIGS. 2A and 2B. FIG. 2B is a schematic enlarged fragmentary view illustrating a first region P of the sensing electrode of FIG. 2A. In the first region P of the sensing electrode 11, each first metal line 111 is correlated with plural corresponding mesh units 14. Consequently, each first metal line 111 may be divided into plural curvy segments. The curvy segments of each first metal line 111 have different lengths and different curvature radii r₁. Similarly, each second metal line 112 is correlated with plural corresponding mesh units 14. Consequently, each second metal line 112 may be divided into plural curvy segments. The curvy segments of each second metal line 112 have different lengths and different curvature radii r₂. Moreover, the curvy segments corresponding to every two adjacent first metal lines 111a and 111b have different lengths and different curvature radii r₁. In other words, the two curvy segments corresponding to the two adjacent first metal lines 111a and 111b of each mesh unit 14 have different lengths and different curvature radii r₁. Similarly, the curvy segments corresponding to every two adjacent second metal lines 112a and 112b have different lengths and different curvature radii r₂. In other words, the two curvy segments corresponding to the two adjacent second metal lines 112a and 112b of each mesh unit 14 have different lengths and different curvature radii r₂. In an embodiment, the curvature radius r₁ of the curvy segment of each first metal line 111 is in the range between 0.05mm and 5mm, and the curvature radius r₂ of the curvy segment of each second metal line 112 is in the range between 0.05mm and 5mm.

Please refer to FIGS. 2A and 2C. FIG. 2C is a schematic enlarged fragmentary view illustrating a second region Q of the sensing electrode of FIG. 2A. In the second region Q of the sensing electrode 11, each first metal line 111 is divided into plural arc segments C₁. The length of each arc segment C₁ is in the range between 0.1mm to 10mm, and preferably in the range between 0.25mm and 1.5mm. Similarly, each second metal line 112 is divided into plural arc segments C₂. The length of each arc segment C₂ is in the range between 0.1mm to 10mm, and preferably in the range between 0.25mm and 1.5mm.

In the two curvy segments corresponding to the two adjacent first metal lines 111a and 111b of each mesh unit 14, the curvature radius r₁ of the longer curvy segment is larger than the curvature radius r₁ of the shorter curvy segment. In the two curvy segments corresponding to the two adjacent second metal lines 112a and 112b of each mesh unit 14, the curvature radius r₂ of the longer curvy segment is larger than the curvature radius r₂ of the shorter curvy segment. Moreover, the two curvy segments of the two adjacent first metal lines 111a and 111b of each mesh unit 14 are not crisscrossed with each other, and the shortest distance between the two curvy segments is in the range between 50µm and 200µm. Similarly, the two curvy segments of the two adjacent second metal lines 112a and 112b of each mesh unit 14 are not crisscrossed with each other, and the shortest distance between the two curvy segments is in the range between 50µm and 200µm.

The material of the transparent substrate 10 may be selected from polyethylene terephthalate (PET), polyetherimide (PEI), polyphenylensulfone (PPSU), polyimide (PI), polyethylene naphthalate (PEN), cyclic olefin copolymer (COC), liquid crystal polymer (LCP) or a combination thereof. The material of the metal lines of the metal mesh (i.e. the sensing electrode 11) may be selected from copper, gold, silver, aluminum, tungsten, iron, nickel, chromium, titanium, molybdenum, indium, tin or a combination thereof. The width of the metal line is in the range between 1 and 20µm, preferably in the range between 1 and 5µm, and preferably smaller than 3µm. Moreover, the thickness of the metal line is in the range between 0.1 and 20µm, preferably in the range between 0.1 and 2µm.

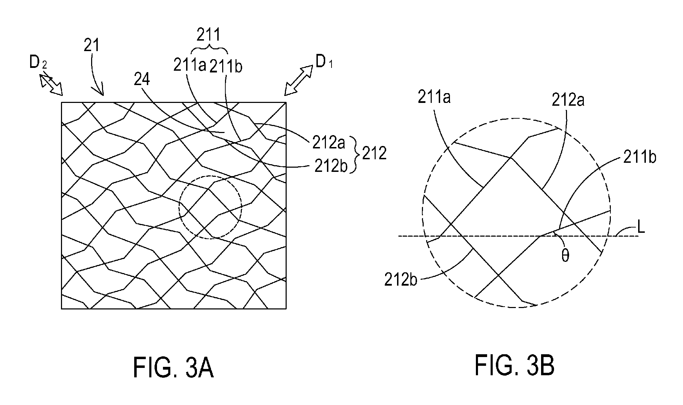

FIG. 3A schematically illustrates the structure of another exemplary sensing electrode of the touch panel of FIG. 1. In this embodiment, the sensing electrode 21 is a metal mesh. The sensing electrode 21 comprises plural first metal lines 211 and plural second metal lines 212. The plural first metal lines 211 are separated from each other and substantially oriented along a first direction D₁. Every two adjacent first metal lines 211a and 211b are not crisscrossed with each other. Moreover, the plural first metal lines 211 are non-linear metal lines and tilted relative to the first axis X and the second axis Y. Preferably, the plural first metal lines 211 are meandering metal lines. The meandering metal line consists of plural straight segments. The plural second metal lines 212 are separated from each other and substantially oriented along a second direction D₂. Every two adjacent second metal lines 212a and 212b are not crisscrossed with each other. Moreover, the plural second metal lines 212 are non-linear metal lines and tilted relative to the first axis X and the second axis Y. Preferably, the plural second metal lines 212 are meandering metal lines. The meandering metal line consists of plural straight segments. Consequently, an irregular mesh unit 24 is defined by every two adjacent first metal lines 211a and 211b and every two adjacent second metal lines 212a and 212b. In other words, the plural first metal lines 211 and the plural second metal lines 212 of the sensing electrode 21 are crisscrossed with each other to construct plural irregular mesh units 24. In this embodiment, the profiles of these irregular mesh units 24 are different. In this embodiment, the first direction D₁ and the second direction D₂ are tilted relative to the first axis X and the second axis Y. Preferably, the tilt angle is in the range between 30 and 60 degree. Under this circumstance, the transmittance is better. Moreover, the angle between the first direction D₁ and the second direction D₂ is in the range between 60 and 120 degree, but is not limited thereto.

FIG. 3B is a schematic enlarged fragmentary view illustrating a portion of the sensing electrode of FIG. 3A. In this embodiment, each first metal line 211 is correlated with plural corresponding mesh units 24. Consequently, each first metal line 211 may be divided into plural segmentation parts. The segmentation parts of each first metal line 211 have different lengths. Similarly, each second metal line 212 is correlated with plural corresponding mesh units 24. Consequently, each second metal line 212 may be divided into plural segmentation parts. The segmentation parts of each second metal line 212 have different lengths. Moreover, the segmentation parts corresponding to every two adjacent first metal lines 211 a and 211b have different lengths. In other words, the two segmentation parts corresponding to the two adjacent first metal lines 211a and 211b of each mesh unit 24 have different lengths. Similarly, the segmentation parts corresponding to every two adjacent second metal lines 212a and 212b have different lengths. In other words, the two segmentation parts corresponding to the two adjacent second metal lines 212a and 212b of each mesh unit 24 have different lengths. In an embodiment, the length of the segmentation part of each first metal line 211 is in the range between 0.1mm and 10mm, and preferably in the range between 0.25mm and 1.5mm. Similarly, the length of the segmentation part of each second metal line 212 is in the range between 0.1mm and 10mm, and preferably in the range between 0.25mm and 1.5mm. Moreover, the angle θ between each segmentation part and the horizontal line L is in the range between 20 degrees and 60 degrees.

Moreover, the two segmentation parts of the two adjacent first metal lines 211a and 211b corresponding to each mesh unit 24 are not crisscrossed with each other, and the shortest distance between the two segmentation parts is in the range between 50µm and 200µm. Similarly, the two segmentation parts of the two adjacent second metal lines 212a and 212b corresponding to each mesh unit 24 are not crisscrossed with each other, and the shortest distance between the two segmentation parts is in the range between 50µm and 200µm. In an embodiment, the segmentation parts of the first metal line 211 are straight segments or meandering segments, and the segmentation parts of the second metal line 212 are straight segments or meandering segments.

From the above descriptions, the present invention provides a touch panel and a sensing electrode thereof. Since the pattern of the metal mesh of the sensing electrode is specially designed, the possibility of generating the moire will be largely reduced and the visibility will be enhanced. Moreover, the arrangement of the metal mesh of the touch panel no longer determined according to the thin film transistor array of the display panel. Consequently, after the touch panel is attached on the display panel, the possibility of generating the moire is minimized.

## Claims

1. A touch panel (1), comprising:
a transparent substrate (10) comprising a visible touch zone (A) and a periphery wiring zone (B), wherein a first side and a second side of the visible touch zone (A) are in parallel with a first axis (X) and a second axis (Y), respectively;
a sensing electrode (11, 21) disposed on the transparent substrate (10) and included in the visible touch zone (A), wherein the sensing electrode (11, 21) comprises plural first metal lines (111, 211) and plural second metal lines (112, 212), wherein the plural first metal lines (111, 211) are separated from each other, the plural second metal lines (112, 212) are separated from each other, and the plural first metal lines (111, 211) and the plural second metal lines (112, 212) are non-linear and tilted relative to the first axis (X) and the second axis (Y), wherein the plural first metal lines (111, 211) and the plural second metal lines (112, 212) of the sensing electrode (11, 21) are crisscrossed with each other to construct plural irregular mesh units (14, 24), and the plural irregular mesh units (14, 24) have different profiles with each other; and
plural metallic traces (12) disposed on the transparent substrate (10) and included in the periphery wiring zone (B), wherein the plural metallic traces (12) are electrically connected with the sensing electrode (11, 21).

2. The touch panel according to claim 1, wherein each first metal line (111) is divided into plural first arc segments (C₁), and each second metal line (112) is divided into plural second arc segments (C₂).

3. The touch panel according to claim 2, wherein a length of the first arc segment (C₁) of each first metal line (111) is in the range between 0.1mm and 10mm, and a length of the second arc segment (C₂) of each second metal line (112) is in the range between 0.1mm and 10mm.

4. The touch panel according to any of the preceding claims, wherein each first metal line (111) corresponding to the plural mesh units (14) is divided into plural first curvy segments with different lengths and different curvature radii (r₁), and each second metal line (112) corresponding to the plural mesh units (14) is divided into plural second curvy segments with different lengths and different curvature radii (r₂).

5. The touch panel according to claim 4, wherein the first curvy segments corresponding to every two adjacent first metal lines (111a, 111b) of the same mesh unit (14) have different lengths and different curvature radii (r₁), and the second curvy segments corresponding to every two adjacent second metal lines (112a, 112b) of the same mesh unit (14) have different lengths and different curvature radii (r₂).

6. The touch panel according to claim 4 or 5, wherein the shortest distance between the first curvy segments corresponding to every two adjacent first metal lines (111a, 111b) of the same mesh unit (14) is in the range between 50µm and 200µm, and the shortest distance between the second curvy segments corresponding to every two adjacent second metal lines (112a, 112b) of the same mesh unit (14) is in the range between 50µm and 200µm.

7. The touch panel according to claim 3, 5 or 6, wherein a length of the first curvy segment of each first metal line (111) is in the range between 0.05mm and 5mm, and a length of the second curvy segment of each second metal line (112) is in the range between 0.05mm and 5mm.

8. The touch panel according to any of the preceding claims, wherein the plural first metal lines (211) and the plural second metal lines (212) are meandering metal lines.

9. The touch panel according to claim 8, wherein each of the meandering metal lines of the plural first metal lines (211) and the plural second metal lines (212) includes plural straight segments.

10. The touch panel according to claim 9, wherein each first metal line (211) corresponding to the plural mesh units (24) is divided into plural first segmentation parts with different lengths, and each second metal line (212) corresponding to the plural mesh units (24) is divided into plural second segmentation parts with different lengths.

11. The touch panel according to claim 10, wherein the first segmentation parts corresponding to every two adjacent first metal lines (211a, 211b) of the same mesh unit (24) have different lengths, and the second segmentation parts corresponding to every two adjacent second metal lines (212a, 212b) of the same mesh unit (24) have different lengths.

12. A sensing electrode (11, 21) included in a visible touch zone (A) of a touch panel (1), a first side of the visible touch zone (A) being in parallel with a first axis (X), a second side of the visible touch zone (A) being in parallel with a second axis (Y), the sensing electrode (11, 21) comprising:
plural first metal lines (111,211) separated from each other, wherein the plural first metal lines (111, 211) are non-linear and tilted relative to the first axis (X) and the second axis (Y); and
plural second metal lines (112, 212) separated from each other, wherein the plural second metal lines (112, 212) are non-linear and tilted relative to the first axis (X) and the second axis (Y),
wherein the plural first metal lines (111, 211) and the plural second metal lines (112, 212) of the sensing electrode (11, 21) are crisscrossed with each other to construct plural irregular mesh units (14, 24), and the plural irregular mesh units (14, 24) have different profiles with each other.
